Europäisches Patentamt

European Patent Office

Office européen des brevets

(11) Veröffentlichungsnummer: **0 061 028**
A2

## (12) EUROPÄISCHE PATENTANMELDUNG

(21) Anmeldenummer: 82101609.4

(22) Anmeldetag: 03.03.82

(51) Int. Cl.³: **H 02 M 1/08**

(30) Priorität: 25.03.81 DE 3111675

(43) Veröffentlichungstag der Anmeldung:
29.09.82 Patentblatt 82 39

(84) Benannte Vertragsstaaten:
FR GB IT SE

(71) Anmelder: Licentia Patent-Verwaltungs-GmbH
Theodor-Stern-Kai 1
D-6000 Frankfurt Main 70(DE)

(72) Erfinder: Nutz, Karl-Diether
Blumenstrasse 33
D-7101 Oedheim(DE)

(74) Vertreter: Langer, Karl-Heinz, Dipl.-Ing. et al,
Licentia Patent-Verwaltungs-GmbH Theodor-Stern-Kai
1
D-6000 Frankfurt Main 70(DE)

(54) Ansteuerschaltung.

(57) Die Erfindung betrifft eine Ansteuerschaltung für einen im Nulldurchgang des Wechselstroms getakteten Schalter, der eine Vollwellenlogik und eine Regeleinheit enthält. Diese Regeleinheit weist einen Treppen-Spannungs-Generator auf, der erfindungsgemäß aus einem mehrstufigen Digitalzähler besteht, wobei dem Zähler ein Digitalanalogwandler nachgeschaltet ist. Dieser Digitalanalogwandler erzeugt eine dem jeweiligen Zählerstand entsprechende, stufenweise anwachsende und sich periodisch wiederholende Spannung.

FIG.2

0061028

Licentia Patent-Verwaltungs-G.m.b.H.
Theodor-Stern-Kai 1, 6000 Frankfurt 70


Heilbronn, den 11.03.81
SE2-HN-Ma/lü - HN 80/34


Ansteuerschaltung

Die Erfindung betrifft eine Ansteuerschaltung für eine nur im Nulldurchgang des Wechselstroms geschaltete Schalteinheit mit einer Vollwellenlogik und einer Regeleinheit, die einen Treppen-Spannungs-Generator enthält, dessen treppenspannungsförmige Ausgangsspannung einer einem Sollwert der Regelung entsprechenden Gleichspannung überlagert und mit einer vom jeweiligen Betriebszustand des geregelten Geräts abgeleiteten Spannung zur Erzielung eines Ansteuersignals für die Vollwellenlogik an einem Komparator verglichen wird.

Eine derartige Ansteuerschaltung wird beispielsweise in der Patentanmeldung P 28 35 893 beschrieben. Sie ist ferner in dem integrierten Schaltkreis U 106 BS der Firma AEG-Telefunken enthalten. Mit der bekannten Schaltung werden insbesondere Thyristoren und Triac's angesteuert, über die beispielsweise die Heizvorrichtungen von Haartrocknern oder Herdplatten an das Wechselstromnetz angelegt werden. Die Vollwellenlogik gewährleistet, daß die Geräte nur im Nulldurchgang des Wechselstroms geschaltet werden, wobei zur Vermeidung von Gleichstromkomponenten Steuerimpulse nur paarweise erzeugt werden.

Die bekannte Schaltung enthält eine Regeleinheit, durch die beispielsweise bei Heizgeräten, Herdplatten oder Haartrocknern Überhitzungen sicher vermieden werden, indem ein erwünschter Spannungssollwert, der beispielsweise einer optimalen Temperatur entspricht an einem Komparator mit einer dem Istwert entsprechenden Spannung verglichen wird.

Über den Komparatorausgang wird die Vollwellenlogik so angesteuert, daß der Istwert möglichst exakt dem Soll- wert entspricht.

Da bei der üblichen Zweipunktregelung Überschwingvorgänge des Istwertes über den Sollwert nicht vermieden werden können, wurde in die Regeleinheit der bekannten Schaltung ein Sägezahngenerator mitintegriert, an dessen Ausgang eine Sägezahnspannung anliegt, die der dem Sollwert entsprechenden Gleichspannung überlagert wird. Durch diese Maßnahme wird sichergestellt, daß der Istwert sich schrittweise derart dem Sollwert annähert, daß Überschwingvorgänge vermieden oder extrem klein gehalten werden. Bei der Proportionalregelung ist die Hysteresis, d. h. die Schwankung des Istwertes um den Sollwert extrem klein.

Bei der bekannten Ansteuerschaltung enthält der Sägezahngenerator einen extern zugeschalteten Kondensator, mit dem die gewünschte Periodendauer eingestellt werden kann. Integrierten Schaltungen extern zugeschaltete Kondensatoren sind teuer und erhöhen die Störanfälligkeit des Gerätes. Sie sollen daher vermieden werden. Der Erfindung liegt somit die Aufgabe zugrunde, eine Ansteuerschaltung mit einem Rampengenerator anzugeben, wobei der Rampengenerator ohne extern zuschaltbaren Kondensator aufgebaut ist. Diese Aufgabe wird bei einer Ansteuerschaltung der eingangs beschriebenen Art erfindungsgemäß dadurch gelöst, daß der Treppen-Spannungs-Generator aus einem mehrstufigen Digital- Zähler besteht, dem ein Digital-Analog-Wandler nachgeschaltet ist, der eine dem jeweiligen Zählerstand entsprechende, stufenweise anwachsende und sich periodisch wiederholende Spannung erzeugt.

Mit Hilfe des Digital-Analog-Wandlers löst jede Zählerstufe einen dem Stellenwert der Stufe entsprechenden Strom aus.

Alle Ströme werden über einem Widerstandsteiler aufsummiert, sodaß eine dem jeweiligen Summenstrom entsprechende Spannung auf einen Eingang des Komparators gegeben werden kann. Hierzu weist der Digital-Analog-Wandler vorzugsweise für jede Zählerstufe einen der Gewichtung der Stufe entsprechenden Widerstand auf, der vorzugsweise im Emitterpfad eines Bipolartransistors liegt, dessen Kollektor an den Widerstandsteiler und den Komparatoreingang angeschlossen ist.

Bei einem bevorzugten Ausführungsbeispiel hat der Zähler 5 Stufen, wobei die 1. Stufe als Vorteiler des vom Nulldetektor abgegebenen Taktes dient. Die übrigen nachgeschalteten Stufen bilden einen 4-Bit-Binärzähler mit stufenweise anwachsender Binärgewichtung, sodaß der Sägezahnimpuls die Form einer ansteigenden 15-stufigen Treppe aufweist.

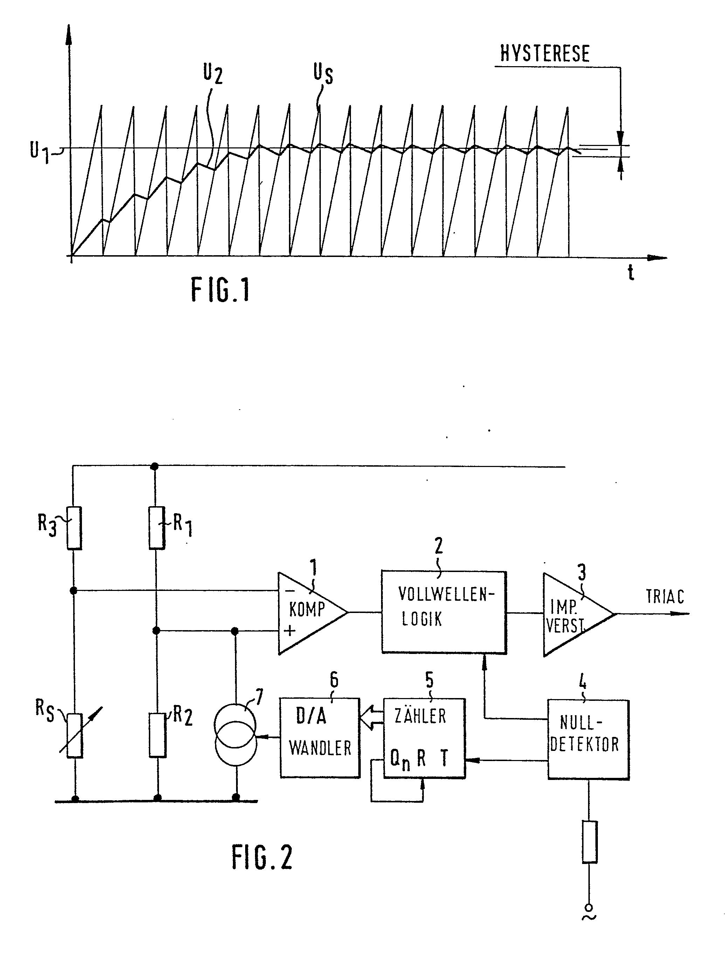

Die Erfindung und ihre weitere vorteilhafte Ausgestaltung soll noch anhand eines Ausführungsbeispiels näher erläutert werden. So zeigt die Figur 1 die Wirkung der Proportionalregelung bei einer Ansteuerschaltung gemäß der Figur 2.

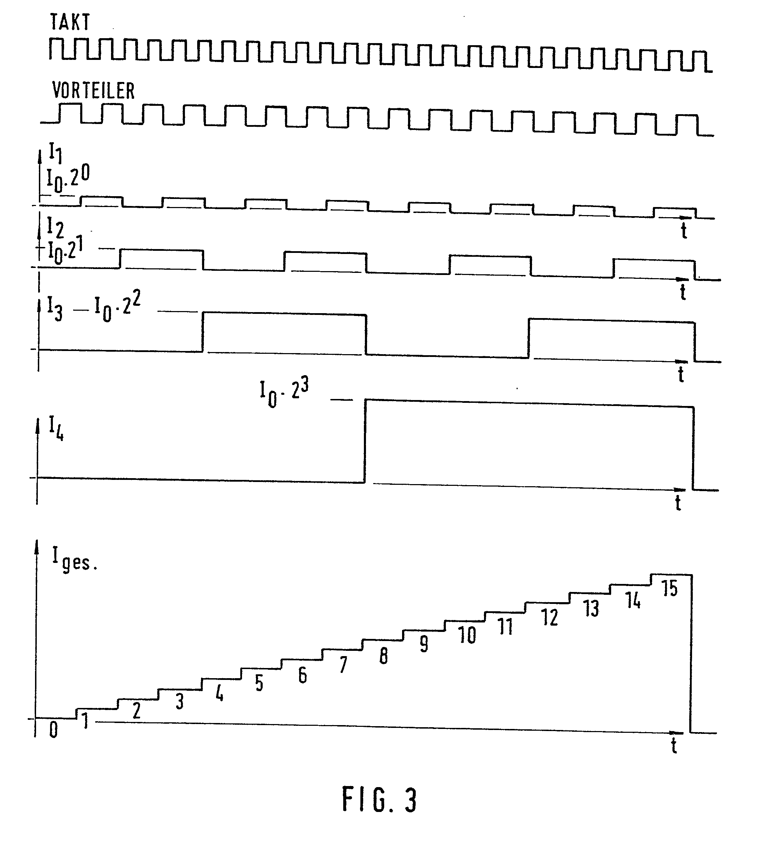

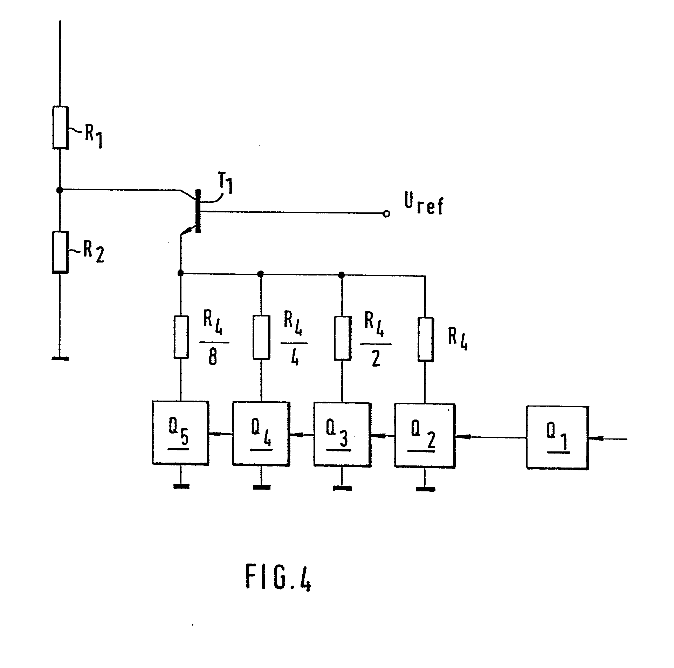

Figur 3 zeigt die Zusammensetzung des treppenspannungsförmigen Impulses, aus den den einzelnen Zählerstufen entsprechenden Analogwerten bei einem Digital-Analog-Wandler gemäß der Figur 4.

In der Figur 1 ist die Wirkungsweise der Proportionalregelung dargestellt, wie sie beispielsweise mit Verhilfe dem Schaltkreis 106 BS herbeigeführt werden kann. Dem nominalen Spannungswert $U_1$, der beispielsweise der gewünschten Temperatur eines geregelten Heizgerätes entspricht, wird eine sägezahnförmige Spannung $U_S$ überlagert. Mit dieser sägezahnförmigen Spannung $U_S$ wird die Spannung $U_2$,

die dem jeweiligen Istwert des Betriebszustandes des Gerätes entspricht, an einem Komparator verglichen. Wenn die Spannung $U_2$ unter der Spannung $U_S$ liegt, sorgt das am Komparatorausgang anstehende Signal dafür, daß die nachgeschaltete Vollwellenlogik Steuerimpulse an einen Triac gibt, durch die dieser durchgeschaltet wird und eine weitere Aufheizung des Gerätes zuläßt. Übersteigt die Spannung $U_2$ den Wert der Sägezahnspannung $U_S$, so wird das Gerät abgeschaltet. Auf diese Weise nähert sich der Istwert $U_2$, ohne daß es zu wesentlichen Überschwingvorgängen kommt, dem Nominalwert $U_1$ in der dargestellten Weise an und schwankt dann geringfügig, d. h. mit kleiner Hystereses, um diesen Wert $U_1$.

Bei der Schaltung gemäß der Figur 2 ist 1 der Komparator, an dem der am Spannungsteiler $R_1$, $R_2$ eingestellte Sollwert mit dem am Spannungsteiler $R_3$, $R_S$ abgegriffenen Istwert verglichen wird. Der Komparatorausgang steuert die Vollwellenlogik 2 an, die ihrerseits über einen Impulsverstärker 3 einen Triac durchsteuert. Das Wechselspannungsnetz liegt an einem Nulldetektor 4, dessen Ausgangsimpulse einmal zur Vollwellenlogik 2 und zum anderen auf den Zähler 5 gegeben werden. Der Zähler 5 bildet zusammen mit dem Digital-Analog-Wandler 6 eine mit 7 symbolisierte Stromquelle, die am Widerstand $R_2$ eine treppenförmige Spannung erzeugt, die sich der durch den Spannungsteiler $R_1$, $R_2$ bedingten Gleichspannung am einen Komparatoreingang überlagert. Bei dem Zähler handelt es sich um einen Standard Binärteiler, der nach der Vollzählung automatisch wieder bei $\emptyset$ beginnt, so daß ein periodisch sich wiederholender Zählvorgang stattfindet.

Gemäß der Figur 3 gibt der Nulldetektor auch einen Taktimpuls ab, dessen Periodendauer bei der Detektion des 50Hz-Wechselstromnetzes 20 msec beträgt. Der Zähler besteht gemäß der Figur 4 beispielsweise aus 5 Stufen $Q_1$ - $Q_5$. Die erste Stufe $Q_1$ dient als Vorteiler gemäß dem zweiten Diagramm der Figur 3. Durch diesen Vorteiler wird die vom Nulldetektor herrührende Taktfrequenz halbiert. Jede weitere Stufe $Q_2 - Q_5$ halbiert die von der vorangehenden Stufe abgegebene Taktfrequenz um den Faktor 2. Dies ergibt sich aus den Diagrammen der Figur 3, die für die Stufen $Q_2 - Q_5$ gelten. Beim Schalten einer Stufe wird jeweils ein Strom durch einen Widerstand freigegeben, der der jeweiligen Zählerstufe zugeordnet ist. So gibt die Stufe $Q_2$ den Widerstand $R_4$ frei, die Stufe $Q_3$ den Widerstand $\frac{R_4}{2}$, die Stufe $Q_4$ den Widerstand $\frac{R_4}{4}$ und die Stufe $Q_5$ den Widerstand $\frac{R_4}{8}$. Daraus ergibt sich, daß der durch die Stufe $Q_2$ ausgelöste Strom $I_1$ einen durch den Widerstand $R_4$ vorgegebenen Wert $I_0$ aufweist. Da der der Stufe $Q_3$ zugeordnete Widerstand halb so groß ist wie $R_4$, wird beim Durchschalten der Stufe $Q_3$ ein Strom durch den Widerstand $\frac{R_4}{2}$ ausgelöst, der den Wert $2 \cdot I_0$ aufweist. Entsprechend ist der durch die Stufe $Q_4$ ausgelöste Strom $I_3$ $4 \cdot I_0$ und der durch die Stufe $Q_5$ ausgelöste Strom $I_4$ $8 \cdot I_0$ groß. Da alle Stromzweige parallel geschaltet sind, fließt durch den Gesamtwiderstand der im untersten Diagramm der Figur 3 dargestellte stufenförmige Summenstrom $I_{ges}$, der sich aus der zeitabhängigen Addition der Einzelströme ergibt und insgesamt 15 Stufen mit der Stufenhöhe $I_0$ aufweist. Nach 15 Bits wird der Zähler wieder zurückgestellt und der Zählvorgang beginnt von neuem. Der Spannung $U_1$ am Abgriff der Spannungsteiler aus den Widerständen $R_1$, $R_2$ gemäß der Figr 4, wird somit durch den Strom über die Emitter-Kollektor-Strecke des Transistors $T_1$ eine Spannung überlagert, die den Maximalwert

$$\Delta U_{ges} = \frac{15 \cdot I_0 \cdot R_1 \cdot R_2}{R_1 + R_2}$$

aufweist. Der Stromquellentransistor T1 in der Figur 4, in dessen Emitter der an den Zähler angeschlossene Gesamtwiderstand liegt, wird basisseitig auf einer Referenzspannung $U_{ref}$ gehalten.

Der fünfstufige Zähler gemäß der Figur 4 kann beispielsweise in $I^2$L-Technik aufgebaut werden. Im Bedarfsfall kann die Stufenzahl des Binärzählers zur Erhöhung oder Verringerung der Periodendauer der Rampenspannung vergrößert oder verkleinert werden. Die Maximalspannung der Treppenspannung kann über den Strom $I_0$ bzw. die den einzelnen Zählerstufen nachgeschalteten Widerständen eingestellt werden.

Licentia Patent-Verwaltungs-G.m.b.H.
Theodor-Stern-Kai 1, 6000 Frankfurt 70

Heilbronn, den 11.03.81
SE2-HN-Ma/lü - HN 80/34

Patentansprüche

1) Ansteuerschaltung für eine nur im Nulldurchgang des Wechselstroms geschaltete Schalteinheit mit einer Vollwellenlogik und einer Regeleinheit, die einen Treppen-Spannungs-Generator enthält, dessen treppenförmige Ausgangsspannung einer einem Sollwert der Regelung entsprechenden Gleichspannung überlagert und mit einer vom jeweiligen Betriebszustand des geregelten Geräts abgeleiteten Spannung zur Erzielung eines Ansteuersignals für die Vollwellenlogik an einem Komparator verglichen wird, dadurch gekennzeichnet, daß der Treppen-Spannungs-Generator aus einem mehrstufigen Digital-Zähler besteht, dem ein Digital-Analog-Wandler nachgeschaltet ist, der eine dem jeweiligen Zählerstand entsprechende, stufenweise anwachsende und sich periodisch wiederholende Spannung erzeugt.

2) Ansteuerschaltung nach Anspruch 1, dadurch gekennzeichnet, daß jede Zählerstufe einen dem Stellenwert der Stufe entsprechenden Strom auslöst, daß alle Ströme summiert werden und daß eine dem jeweiligen Summenstrom entsprechende Spannung auf einen Komparatoreingang gegeben wird.

3) Ansteuerschaltung nach Anspruch 2, dadurch gekennzeichnet, daß jeder Zählerstufe ein der Gewichtung der Stufe entsprechender Widerstand nachgeschaltet ist, daß alle Widerstände gemeinsam auf den Emitter eines die Stromsumme bildenden Transistors in Basisschaltung führen, dessen Kollektor an einen Widerstandsteiler und an den Komparatoreingang angeschlossen ist.

4) Ansteuerschaltung nach einem der vorangehenden Ansprüche, dadurch gekennzeichnet, daß der Zähler 5 Stufen aufweist, daß die 1. Stufe als Vorteiler des vom Nulldetektor abgegebenen Taktes dient, während die übrigen Stufen einen 4-bit-Binärzähler mit stufenweise anwachsender Binärgewichtung bilden.

FIG.1

FIG.2

TAKT

VORTEILER

$I_1$
$I_0 \cdot 2^0$
$t$

$I_2$
$I_0 \cdot 2^1$
$t$

$I_3 - I_0 \cdot 2^2$
$t$

$I_0 \cdot 2^3$

$I_4$
$t$

$I_{ges.}$

15
14
13
12
11
10
9
8
7
6
5
4
3
2
1
0
$t$

FIG. 3

FIG.4